# EUROPEAN PATENT SPECIFICATION

(11) **EP 0 714 824 B1**
(45) Date of publication and mention of the grant of the patent: **01.12.1999**
(21) Application number: 95118826.7
(22) Date of filing: 30.11.1995
(51) Int. Cl.: B62D 21/15, B62D 1/19

(54) **Supporting structure for steering gear of automobile**
Tragwerk für Lenkgetriebe von Kraftfahrzeugen
Structure de support d'une boîte de direction de véhicule automobile

(30) Priority: 02.12.1994 JP 29944594
(43) Date of publication of application: 05.06.1996
(73) Proprietor: DAIHATSU MOTOR COMPANY, LTD., Ikeda-shi, Osaka-fu 563 (JP)
(72) Inventor: Tanaka, Yoshihito, c/o Daihatsu Motor Co., Ltd., Ikeda, Osaka (JP); Ogura, Masatoshi, Ikeda, Osaka (JP); Hiratsuka, Hiroaki, Ikeda, Osaka (JP); Fujita, Haruo, Ikeda, Osaka (JP)
(74) Representative: Schumacher, Horst, Dr. Dipl.-Phys.

(56) References cited:
- DE-A- 3 925 989
- FR-A- 2 120 386
- US-A- 5 385 369
- PATENT ABSTRACTS OF JAPAN vol. 016 no. 428 (M-1307) ,8 September 1992 & JP-A-04 146874 (MAZDA MOTOR CORP) 20 May 1992,

## Description

### TECHNICAL FIELD

The present invention relates to a supporting structure for a steering gear of an automobile wherein the steering gear converts a rotational operating motion of the steering wheel of the automobile into a reciprocating motion of a tie rod. More specifically, the present invention relates to a supporting structure for a steering gear of an automobile, the steering gear being connected to the steering wheel which is provided at the driver seat, wherein the supporting structure serves to prevent the steering wheel from unduly projecting toward the driver in a head-on collision of the automobile.

### BACKGROUND ART

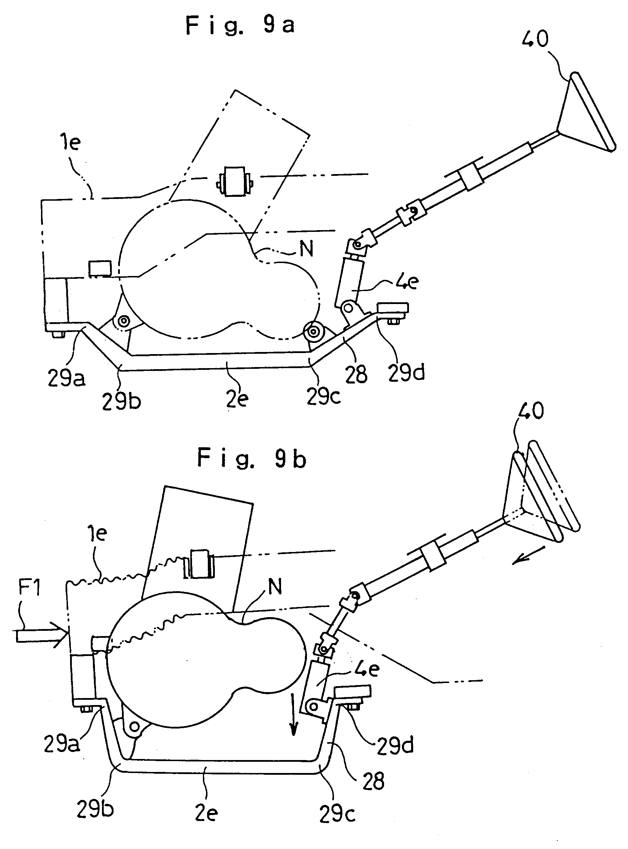

A conventional supporting structure for a steering gear with the construction defined in the preambles of claims 1 and 7 is disclosed, for example, in Japanese Patent Application Laid-open No. 5(1993)-185951. As shown in Fig. 9a, the prior art has a pair of sub-frame members 2e, each being connected to a side member 1e which serves as a body frame of an automobile. The sub-frame member 2e has a plurality of bent portions 29a-29d formed therein. The sub-frame member 2e also has a sloping portion 28 formed at a rear portion of the sub-frame member 2e. The steering gear 4e is carried by the sloping portions 28. With such an structure, when the automobile comes into head-on collision and a crashing force F1 having a magnitude greater than a certain value is applied to front ends of the side members 1e and sub-frame members 2e as shown in Fig. 9b, the bent portions 29a-29d of the sub-frame member 2e are forced to bend. Such bending changes the angle of the sloping portion 28 at the rear portion, so that the steering gear 4e is lowered. As the steering gear 4e shifts downward, the steering wheel 40 is pulled accordingly forward of the automobile. In this manner, the steering wheel 40 is prevented from unduly projecting or moving backward toward the driver upon a head-on collision of the automobile.

However, in the prior art described above, the steering gear 4e is connected to the sloping portions 28 at the respective rear portions of the sub-frame members 2e for a downward shift by an angular change of the sloping portions 28.

In order to perform a desired angular change of the sloping portion 28 at the rear portion of the sub-frame member 2e by application of the crashing force F1, it is necessary that the crashing force F1 effectively acts on two bent portions 29c, 29d formed to the both sides of the sloping portion 28, and further that flexural deformation of these two bent portions 29c, 29d begins prior to that of the other bent portions 29a, 29b at a forward portion relative to the bent portions 29c, 29d. If the bent portions 29a, 29b should begin to deform earlier than the other bent portions, the deformation at the bent portions 29a, 29b may absorb the crashing force F1. As a result, the downward shifting of the steering gear 4e, because of the lack of a proper angular change of the sloping portion 28, might be hindered.

Further, some parts of the sub-frame member 2e are usually connected to automobile components in various ways. Therefore, the crashing force F1 aplied to the sub-frame member 2e may be absorbed and dissipated, or concentrated somewhere forward from the sloping portion 28 of the sub-frame member 2e.

To deal with these cases, in the prior art, the flexural strength of these bent portions 29a-29d should be set at a strictly adjusted value, so that the deformation of the bent portions 29c, 29d formed to the both sides of the sloping portion 28 starts prior to the deformation of the other bent portions 29a, 29b. Consequently, manufacturing process of the sub-frame member 2e may become very complicated to increase manufacturing costs. Further, if setting the strength of each of the bent portions 29a-29d should not be proberly performed, it may be conceivable that the desired angular shifting of the sloping portion 28 of the sub-frame member 2e would not carried out as expected.

Further, in the prior art, the front and rear portions of the sub-frame member 2e are connected via a substantially solid power plant N (an engine). Such a structure is adopted for making it possible to transmit the crashing force F1 applied to the front end of the sub-frame member 2e, via the engine N, to the sloping portion 28. However, there are various types of automobile and some of them may not have their engines mounted on the sub-frame members 2e.

Further the DE 39 25 989 A1 discloses a supporting structure or a steering gear of an automobile comprising a mechanical converting means for converting a crashing force into downward movement of the steering gear which is connected to a steering wheel of the automobile. The mechanical converting means comprises of a frame member being positioned below the main frame of the automobile and carrying the front end of the steering gear. The lower frame member is positioned slidably below a forwardly raising sloping portion of the main frame. If upon a head-on collision of the automobile the crashing force is generated the lower frame member slides along the sloping portion of the main frame backwardly and downwardly. Thus the lower end of the steering gear is retracted resulting in a downword movement of the steering wheel.

### DISCLOSURE OF THE INVENTION

The present invention is proposed under the situation described above. According to the present invention, there is no need to be troubled by a complicated process such as determining the exact flexural strength of plural portions of the sub-frame member. An object of the present invention is to reliably prevent a steering wheel from unduly projecting rearward by ensuring downward shifting of the steering gear upon a head-on collision of the automobile.

According to a first aspect of the present invention, there is provided a supporting structure for a steering gear of an automobile comprising a mechanical converting means for converting a crashing force into downward movement for the steering gear which is connected to a steering wheel of the automobile. The crashing force, which is generated upon a head-on collision of the automobile, is applied to the front end of the automobile. The steering gear is mounted adjacent to the front end of the automobile and that the converting means is so designed that the crashing force is transmitted to lower the steering gear thus mounted to adjacent to the front end of the automobile. The converting means includes a pair of sub-frame members each of which is connected to a corresponding one of a pair of body frames of the automobile. In this case, each sub-frame member has a sloping portion formed at a forward portion of the sub-frame member. The supporting structure is characterized in that the steering gear is supported by the sloping portion, said each sub-frame member having a flexure-facilitating portion backwardly spaced from the sloping portion, whereby the flexure-facilitation portion functions to increase the inclination of the sloping portion upon the head-on collision of the automobile. Such an upright raising of the sloping portions enables a downward movement of the steering gear supported on these sloping portions.

The flexure-facilitating portion of each sub-frame member is formed by making the flexural strength of the flexure-facilitating portion smaller than the other parts of said each sub-frame member. Specifically, the flexure-facilitating portion may be formed by making a recess at the relevant position.

Further, a bending process may be applied at each flexure-facilitating portion in the relevant sub-frame member, so that the flexure-facilitating portion can be perform a desired deformation more easily.

According to the second aspect of the present invention the converting means includes a bracket assembly instead of the sub-frame members as definded in claim 1. The bracket assembly is arranged so that a front edge of the bracket assembly can rotate backward when the crashing force due to the head-on collision is applied to the front edge. The steering gear is connected to the bracket assembly at a portion which is backwardly downward relative to the front edge of the bracket assembly having the arrangement described above. Because of the connection at such a position, the steering gear is caused to move downward as the bracket assembly rotates in a desired manner. It is possible to use the bracket assembly alone. When using the bracket in combination with the sub-frame member, the bracket assembly carying the steering gear is provided extending between the sloping portions of the respective sub-frame members. In this case, the amount of the downward shifting of the steering gear is a sum of the downward shiftings due to the upright raising of the sub-frame member and the rotation of the bracket assembly. When using the bracket assembly by itself, the bracket assembly is advantageously attached to a forward portion of the body frames of the automobile. In such a case, the front edge of the bracket assembly preferably projects forward beyond the body frame.

It is possible to apply various technical measures to the bracket assembly so that the bracket assembly can rotate in a desired manner. For instance, it is conceivable that intermediate portions each of which is located between a central portion and each end portion of the bracket assembly are formed to have a small stiffness. The bracket assembly may have a hollow body and a triangular cross section for example.

The present invention will now be described further on the basis of a preferred embodiment with reference to the accompanying drawings.

### BRIEF DESCRIPTION OF THE DRAWINGS

Fig. 1 is a schematic side view showing a primary part of a supporting structure for a steering gear of an automobile according to the present invention;
Fig. 2 is a plan view showing the primary part in Fig. 1;
Fig. 3 is a perspective view illustrating an embodiment of sub-frame members and a bracket assembly;
Fig. 4 is a sectional view taken along line X1-X1 in Fig. 3;
Fig. 5 is a schematic side view illustrating the primary part of the supporting structure shown in Fig. 1 in a head-on collision.
Fig. 6 is a perspective view of a primary part illustrating how the bracket assembly rotates;
Fig. 7 is a sectional view taken along line X2-X2 in Fig. 6;

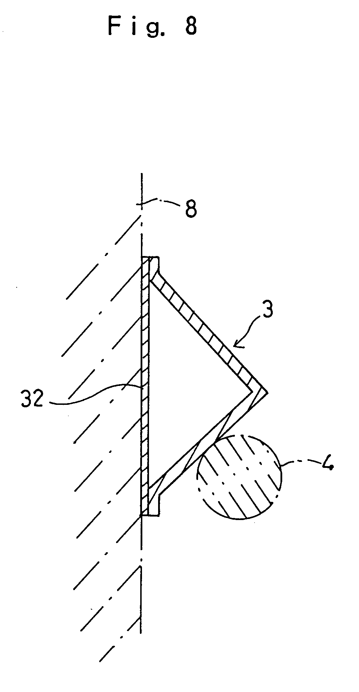

Fig. 8 is a sectional view illustrating a state where a barrier comes into collision with the bracket assembly; and
Figs. 9a, 9b are side views illustrating the primary part of a prior art supporting structure for a steering gear of an automobile.

### DETAILED DESCRIPTION OF THE INVENTION

Preferred embodiments of the present invention will be described below with reference to the accompanying drawings.

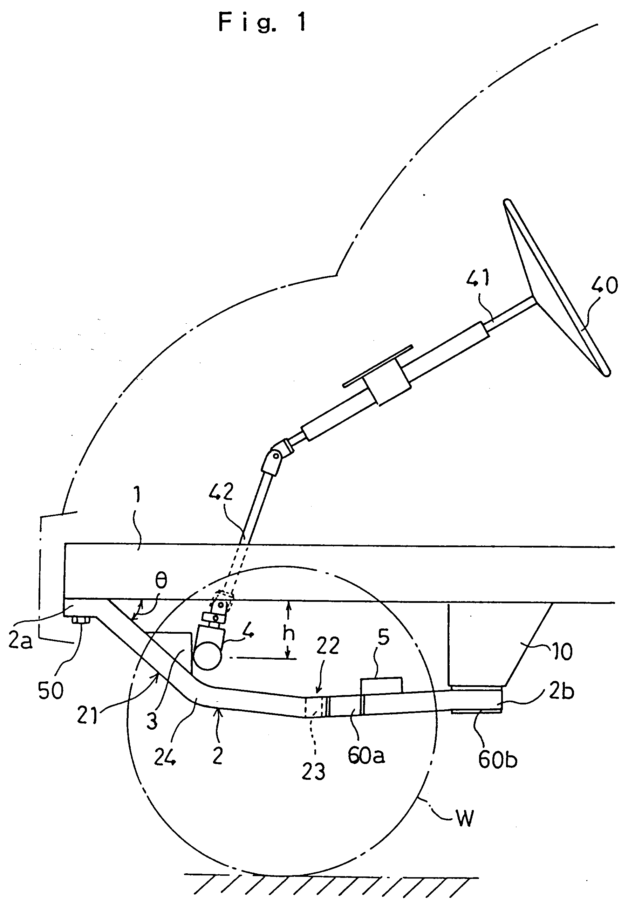

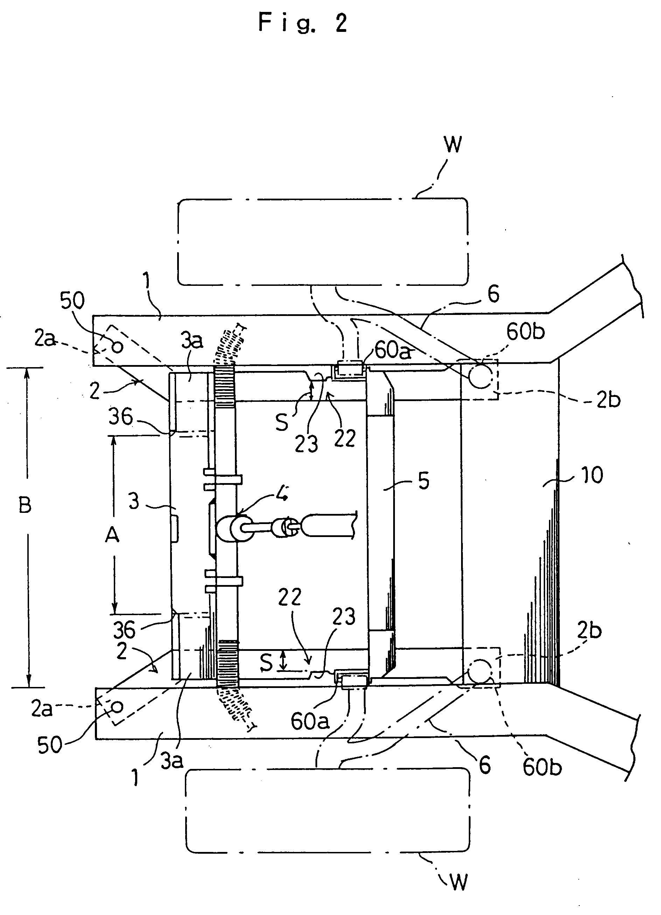

Fig. 1 is a side view schematically showing a supporting structure for a steering gear of an automobile according to the present invention, whereas Fig. 2 is a plan view of the supporting structure. As shown in Figs. 1 and 2, the supporting structure for the steering gear includes a pair of side sub-frame members 2 extending lengthwise of the automobile and attached to the underside of a pair of front side members 1 which extend forward beyond the driver seat of the automobile. A bracket assembly 3 is provided to extend widthwise of the automobile between the sub-frame members 2. The steering gear designated by reference numeral 4 is attached to the bracket assembly 3. The steering gear 4 is connected, via a universal joint 42 and a steering shaft 41, to a steering wheel 40 provided at the driver seat.

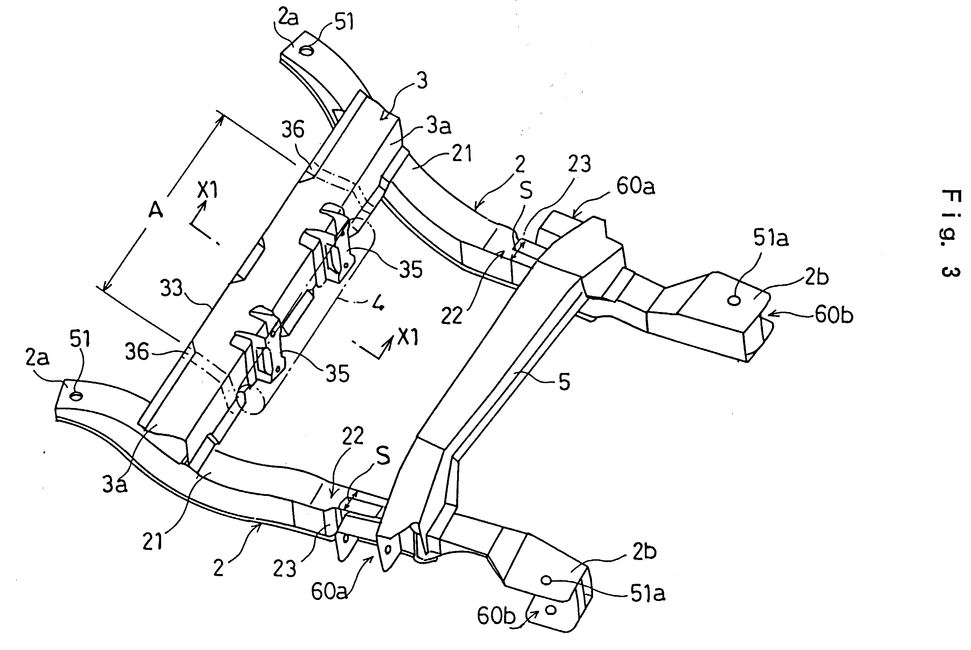

Fig. 3 is a perspective view showing the side sub-frame members 2 and the bracket assembly 3. The sub-frame members 2 are connected to each other by the bracket assembly 3 and a reinforcement member 5 to provide an overall sub-frame. The front and rear ends 2a, 2b of each sub-frame member 2 are provided with bolt-insertion bores 51, 51a. The front end 2a is attached, by a bolt 50, to the lower surface of the front portion of the corresponding front side member 1. The rear end 2b is bolted to a fixing bracket 10 which is attached to the lower surface of the front side member 1 to project downward therefrom.

As is clearly shown in Fig. 1, there is formed a sloping portion 21 at a forward portion of each sub-frame member 2. The sloping portion 21 rises forwardly of the automobile. The sloping portion 21 carries the bracket assembly 3 attached thereto, and the bracket assembly 3, in turn, carries the steering gear 4 attached thereto. On the other hand, a rear portion of the sub-frame member 2 has two arm-fixing portions 60a, 60b spaced from each other lengthwise of the automobile for fixation of a lower arm 6 which supports a wheel (a front wheel) W shown in Fig. 2. Connection of the lower arm 6 to the rear arm-fixing portion 60b as well as connection of the rear end 2b of the sub-frame member 2 to the fixing bracket 10 is performed by a common bolt.

Each sub-frame member 2 has a flexure-facilitating portion 22 at a position backwardly spaced from the sloping portion 21 and forwardly spaced from the front arm-fixing portion 60a. The flexure-facilitating portion 22 is formed by making the flexural strength of the relevant part of the sub-frame member 2 smaller than any other part. For instance, a recess 23 may be provided to make the width S of the relevant part of the sub-frame member 2 smaller than any other part. Further, as shown in Fig. 1, the sub-frame member 2 is bent slightly at the flexure-facilitating portion 22. As a result, the sub-frame member 2 begins to bend at the flexure-facilitating portion 22 when an external force greater than a predetermined value is applied to the front of the automobile body. However, the present invention is not limited to the embodiment described above with respect to the specific arrangement and position of the flexure-facilitating portion 22. For instance, a bent portion 24 located at the rear end of the sloping portion 21 may function as a flexure-facilitating portion by setting the flexural strength of the bent portion 24 small.

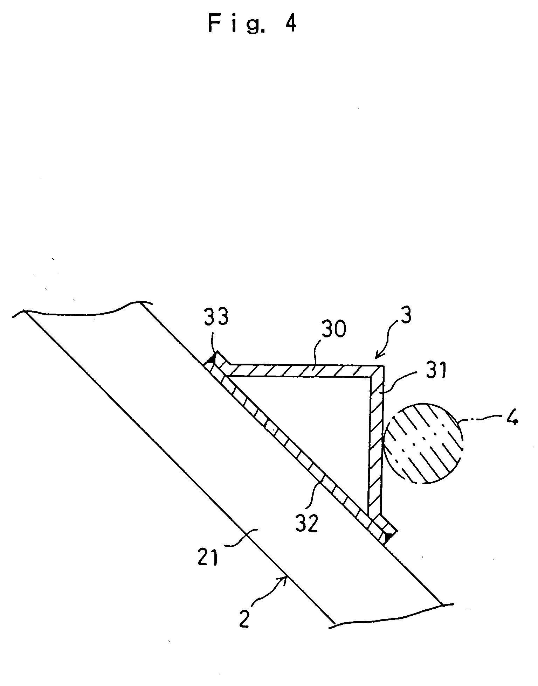

Fig. 4 is a sectional view taken along line X1-X1 in Fig. 3, illustrating the bracket assembly 3 in cross section. As shown, the bracket assembly 3 is formed to have a hollow triangular cross section which is defined by a horizontal upper wall 30, a vertical rear wall 31 and a forwardly rising sloping wall 32. Of these walls, the rear wall 31 has a pair of attaching members 35 (see Fig. 3) formed thereon for carrying the steering gear 4 which, when attached, extends along the rear wall 31. With such an arrangement, the fixing position of the steering gear 4 is rendered to be backwardly downward relative to the front edge 33 of the bracket assembly 3.

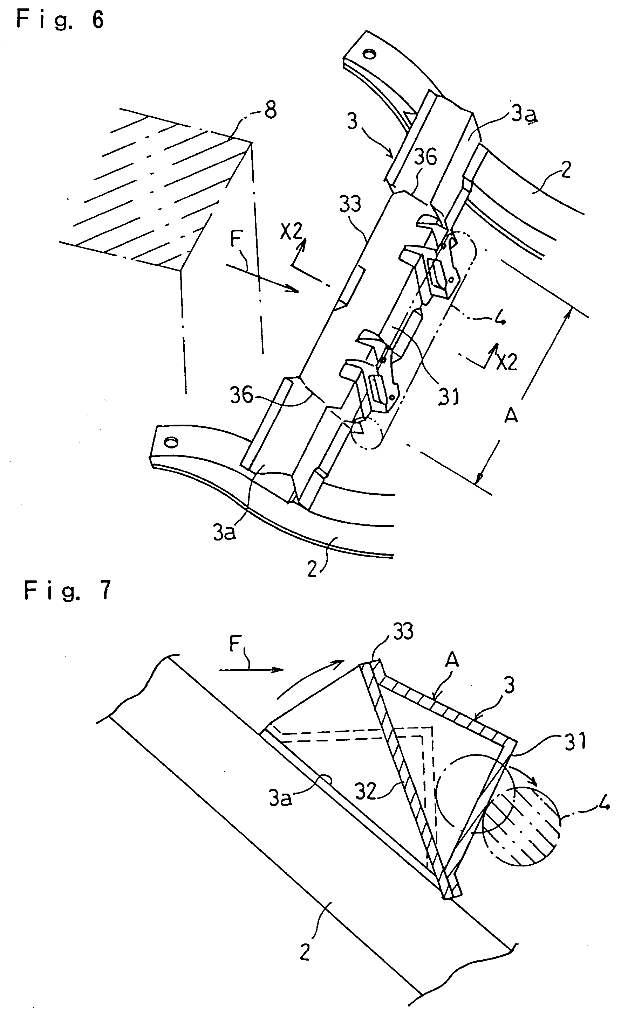

As shown in Figs. 2 and 3, the bracket assembly 3 includes a pair of end portions 3a and a central portion A. The end portions 3a are attached to the sloping portions 21 of the relevant sub-frame members 2. The central portion A substantially supports the steering gear 4. The bracket assembly 3 also includes an intermediate portion 36 between each end portion 3a and the central portion A. The stiffness of the intermediate portion 36 is set smaller than that of the central portion A and the end portion 3a. By such an arrangement, as shown in Figs. 6 and 7, when a horizontal external force F greater than a predetermined value is applied, from ahead, to the central portion A of the bracket assembly 3, a torsional deflection occurs at the intermediate portion 36, thereby causing the front edge 33 of the central portion A to move backward. On the other hand, the end portion 3a of the assembly bracket 3 is fixed to the corresponding sub-frame member 2. As a result, the central portion A alone can partially rotate.

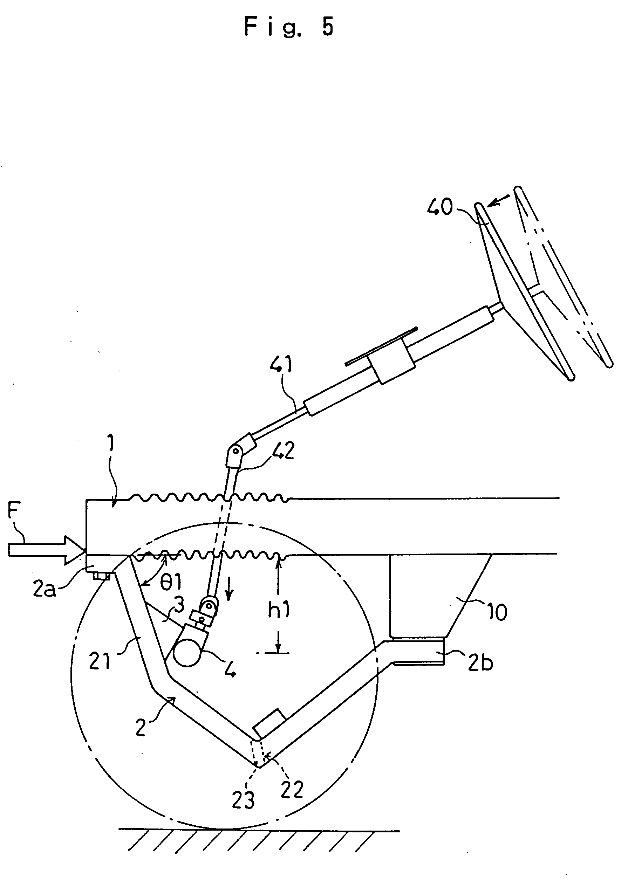

With the supporting structure described above, the front side members 1 are subjected to a compressing deformation when, as shown in Fig. 5, a horizontally backward crashing force F is applied to the front end of each front side member 1 and sub-frame members 2 due to a head-on collision of the automobile. Simultaneously, the sub-frame member 2 begins to bend at the flexure-facilitating portion 22 whose flexural strength is set smallest. As a result, the crashing force F pushes back the upper end of the sloping portion 21 of the sub-frame member 2.

Therefore, the sloping angle θ1 of the sloping portion 21 of the sub-frame member 2 becomes greater than the initial sloping angle θ shown in Fig. 1. When the angular change of the sloping portion 21 thus occurs, with the upper part of the sloping portion 21 connected to the corresponding front side member 1, the steering gear 4 attached to the sloping portion 21 is shifted downward. In other words, the spacing between the front side member 1 and the steering gear 4 increases from h to h₁. Accordingly, the universal joint 42 is lowered by an amount corresponding to the downward shifting of the steering gear 4. Because of this, the steering shaft 41 is pulled forward, thereby causing the steering wheel 40 to move forward, too. Thus, even when the front side member 1 and sub-frame member 2 are crashed, the steering wheel 40 is prevented from unduly projecting backwardly toward the driver, thereby ensuring the safety of the driver.

The essential factor for enabling the angular change of the sloping portion 21 in the above-described manner is just a realization at the flexural deformation at the flexure-facilitating portion 22 which is backwardly spaced from the sloping portion 21. Therefore, there is no need to set plural portions of the sub-frame member 2 in a complicated strength relationship, thereby facilitating manufacture of the sub-frame member 2.

When the sloping portions 21 of the respective sub-frame members 2 perform angular shifting in the above-described manner, the bracket assembly 3 attached to the sloping portions 21 is rotated backwardly from the initial position shown in Fig. 1. Due to this rotation of the bracket assembly 3, the steering gear 4 attached to the bracket assembly 3 is also lowered. More specifically, in the initial state shown in Fig. 1, the steering gear 4 is attached to the vertical rear wall 31 of the bracket assembly 3. With such an arrangement, backward rotation of the bracket assembly 3 causes the fixing point of the steering gear 4 to shift downward. Therefore, the downward displacement of the steering gear 4 is a sum of the downward shifts due to both the rotational movement of the bracket assembly 3 and the sloping angle increase of the sloping portions 21 of the respective sub-frame members 2, thereby making it possible to realize large downward shifting of the steering gear 4. As a result, the steering wheel 40 can be moved forwardly by a large amount, so that additionally improved safety for the driver can be enjoyed. It should be noted that the connection of the universal joint 42 to the steering gear 4 is maintained even if the steering gear 4 is displaced.

On the other hand, a head-on collision of an automobile may occur in various manners. Thus, the front ends of the front side members 1 and sub-frame members 2 will not always collide with a barrier (an object against which the automobile collides). For instance, if the width of the barrier is small, a collision may occur only in a range B (see Fig. 2) between the pair of front side members 1. In such a case, as shown in Fig. 6, when the narrow barrier 8 and the central portion A of the bracket assembly 3 collide with each other, a crashing force is applied to the front edge 33 of the bracket assembly 3. As a result, the front edge 33 of the bracket assembly 3 is forced to rotate backward, whereas each end portion 3a of the bracket assembly 3 remains fixed to the sub-frame member 2. Such a rotation of the central portion A serves to lower the fixing point of the steering gear 4 attached to the central portion A, as shown in Fig. 7. Thus, the downward shifting of the steering gear 4 pulls the steering wheel 40 forward, so that the steering wheel 40 is prevented from projecting unduly backwardly toward the driver.

According to the illustrated embodiment, since the sloping wall 32 is formed to have a flat and forwardly rising slope, the bracket assembly 3 can rotate backward until the sloping wall 32 comes into full contact with the front surface of the barrier 8. This makes it possible to obtain a large backward rotation of the bracket assembly 3, so that a large amount of downward shifting of the steering gear 4 can be expected.

In the embodiment described above, the bracket assembly 3 is attached to the sloping portions 21 of the respective sub-frame members 2, and the steering gear 4 is attached to the bracket assembly 3. Thus, downward shifting of the steering gear 4 occurs not only due to the angular change of the sloping portions 21 but also due to the backward rotation of the bracket assembly 3. However, the present invention is not limited to this embodiment. For instance, the steering gear 4 may be directly attached to the respective sloping portions 21. In this case, downward displacement of the steering gear 4 is obtained solely by an angular change of the respective sloping portions 21.

As described above, the present invention is different from the prior art whose steering gear 4e is lowered by changing the angle of the sloping portions 28 formed at a rear portion of the respective sub-frame members 2e. Further, the present invention needs no connection between two front and rear parts of each sub-frame member 2 via an engine for example because a crashing force resulting from a head-on collision of the automobile is directly applied to the sloping portion 21 formed at a forward portion of each sub-frame member 2. Thus, according to the present invention, the steering gear 4 shifts downwardly upon a head-on collision of the automobile with a higher reliability than is possible by the prior art, thereby providing a remarkable safety improvement.

Further, unlike the prior art, each sub-frame member 2 need not have a plurality of bent portions each of which is set to have a strictly adjusted flexural strength for realizing desired angular shifting of the sloping portion 21. Thus, the sub-frame member 2 can be manufactured easily at a reduced cost.

In the present invention, it is not essential to mount the bracket assembly 3 to the sub-frame members 2. Instead, the end portions 3a of the bracket assembly 3 may be attached to the front ends of the respective front side members 1. By such an arrangement, the bracket assembly 3 extending between the front side members 1 receives a crashing force to rotate upon a head-on collision of the automobile. In this case, it is preferable that the front edge 33 of the bracket assembly 3 be rendered to project a little forward beyond the front side members 1, thereby facilitating application of the crashing force to the bracket assembly 3.

While, in the illustrated embodiment, the central portion A of the bracket assembly 3 is designed to partially rotate by the crashing force F, the present invention is not limited to this embodiment. For instance, the bracket assembly may be designed to rotate as a whole upon application of the crashing force F. Further, means for realizing rotation of the bracket assembly 3 is not limitative. For instance, the bracket assembly 3 may be supported by a rotatable support for rotation about the rotatable support when a crashing force greater than a predetermined value is applied to the bracket assembly 3.

## Claims

1. A supporting structure for a steering gear (4) of an automobile comprising a mechanical converting means for converting a crashing force into downward movement of the steering gear (4) which is connected to a steering wheel (40) of the automobile, the crashing force being generated upon a head-on collision of the automobile and applied to the front end of the automobile, the steering gear (4) being mounted adjacent to the front end of the automobile, the converting means including sub-frame members (2) each of which is connected to a body frame of the automobile, each sub-frame member (2) having a forwardly rising sloping portion (21) formed at a front portion of said each sub-frame member (2), characterized in that the steering gear (4) is supported by the sloping portion (21), said each sub-frame member (2) having a flexure-facilitating portion (22) backwardly spaced from the sloping portion (21), whereby the flexure-facilitating portion (22) functions to increase the inclination of the sloping portion (21) upon the head-on collision of the automobile.

2. The supporting structure according to claim 1, wherein the flexure-facilitating portion (22) is formed by reducing the flexural strength at the flexure-facilitating portion (22) of said each sub-frame member (2).

3. The supporting structure according to claim 2, wherein the flexure-facilitating portion (22) is formed by making a recessed portion (23) at the flexure-facilitating portion (22) of said each sub-frame member (2).

4. The supporting structure according to any one of claims 1-3, wherein a bend is formed at the flexure-facilitating portion (22) of said each sub-frame member (2).

5. The supporting structure according to any one of claims 1-4, wherein the converting means further includes a bracket assembly (3) which is supported by and extends between the sloping portions (21) of the sub-frame members (2), the steering gear (4) being connected to the bracket assembly (3).

6. The supporting structure according to claim 5, wherein the bracket assembly (3) is mounted for rotation to make a front edge (33) of the bracket assembly (3) move backward when the crashing force due to the head-on collision is applied to the front edge (33), and wherein the steering gear (4) is connected to the bracket assembly (3) at a position which is backwardly downward relative to the front edge (33) of the bracket assembly (3) so that the steering gear (4) is lowered as the bracket assembly (3) rotates.

7. A supporting structure for a steering gear (4) of an automobile comprising a mechanical converting means for converting a crashing force into downward movement of the steering gear (4) which is connected to a steering wheel (40) of the automobile, the crashing force being generated upon a head-on collision of the automobile and applied to the front end of the automobile, the steering gear (4) being mounted adjacent to the front end of the automobile, characterized in that the converting means includes a bracket assembly (3) which is mounted adjacent to the front end of the body frame (1) for rotation to make a front edge (33) of the bracket assembly (3) move backward when the crashing force due to the head-on collision is applied to the front edge (33), the steering gear (4) being connected to the bracket assembly (3) at a position which is backwardly downward relative to the front edge (33) of the bracket assembly (3) so that the steering gear (4) is lowered as the bracket assembly (3) rotates.

8. The supporting structure according to claim 7, wherein the bracket assembly (3) includes a pair of intermediate portions (36) each of which located between a central portion (A) and each end portion (3a) of the bracket assembly (3), the intermediate portions having a reduced stiffness.

9. The supporting structure according to claim 7 or 8, wherein the bracket assembly (3) has a hollow triangular cross section, the triangle having a horizontal upper wall (30), a vertical rear wall (31) and a forwardly rising sloping wall (32).

10. The supporting structure according to claim 9, wherein the sloping wall (32) is flat.

## Patentansprüche

1. Tragende Struktur eines Lenkgetriebes (4) eines Automobils, umfassend ein mechanisches umwandelndes Mittel zur Umwandlung einer Aufprallkraft in eine Abwärtsbewegung des mit dem Lenkrad (40) des Automobils verbundenen Lenkgetriebes (4), wobei die Aufprallkraft durch eine Frontalkollision des Automobils erzeugt und der Vorderseite des Automobils zugeführt wird, das Lenkgetriebe (4) in der Nähe der Vorderseite des Automobils angebracht ist und das umwandelnde Mittel Sub-Chassis-Bauteile (2) aufweist, die jeweils mit dem Chassis des Automobils verbunden sind und einen nach vorn und oben geneigten Abschnitt (21) aufweisen, welcher an einem vorderen Teil jedes Sub-Chassis-Bauteils (2) ausgebildet ist,
**dadurch gekennzeichnet,**
daß das Lenkgetriebe (4) von dem geneigten Abschnitt (21) getragen ist und daß jedes Sub-Chassis-Bauteil (2) einen knickungsfördernden Abschnitt (22) aufweist, welcher rückwärts von dem sich geneigten Abschnitt (21) angeordnet ist, wodurch der knickungsfördernde Abschnitt (22) bei einer Frontalkollision des Automobils eine Erhöhung der Steigung des sich geneigten Abschnitts (21) bewirkt.

2. Tragende Struktur nach Anspruch 1, wobei der knickungsfördernde Abschnitt (22) durch Reduzierung des Biegewiderstandes am knickungsfördernden Abschnitt (22) jedes Sub-Chassis-Bauteils (2) ausgebildet wird.

3. Tragende Struktur nach Anspruch 2, wobei der knickungsfördernde Abschnitt (22) durch eine Ausnehmung (23) am knickungsfördernden Abschnitt (22) jedes Sub-Chassis-Bauteils (2) gebildet ist.

4. Tragende Struktur nach einem der Ansprüche 1 bis 3, wobei ein Knick am knickungsfördernden Abschnitt (22) jedes Sub-Chassis-Bauteils (2) ausgebildet ist.

5. Tragende Struktur nach einem der Ansprüche 1 bis 4, wobei das umwandelnde Mittel weiterhin eine Lagerbockanordnung (3) aufweist, welche von den geneigten Abschnitten (21) der Sub-Chassis-Bauteile (2) getragen wird und sich zwischen diesen erstreckt und wobei das Lenkgetriebe (4) mit der Lagerbockanordnung (3) verbunden ist.

6. Tragende Struktur nach Anspruch 5, wobei die Lagerbockanordnung (3) drehbar angebracht ist, um eine Vorderkante (33) der Lagerbockanordnung (3) sich nach rückwärts bewegen zu lassen, wenn die Aufprallkraft einer Frontalkollision auf die Vorderkante (33) wirkt, und wobei das Lenkgetriebe (4) mit der Lagerbockanordnung (3) an einer Stelle verbunden ist, welche relativ zu der Vorderkante (33) der Lagerbockanordnung (3) weiter hinten und tiefer gelegen ist, so daß das Lenkgetriebe (4) bei einer Drehung der Lagerbockanordnung (3), abgesenkt wird.

7. Tragende Struktur eines Lenkgetriebes (4) eines Automobils umfassend ein mechanisches umwandelndes Mittel zur Umwandlung einer Aufprallkraft in eine Abwärtsbewegung des mit dem Lenkrad (40) des Automobils verbundenen Lenkgetriebes (4), wobei die Aufprallkraft durch eine Frontalkollision des Automobils erzeugt und der Vorderseite des Automobils zugeführt wird und das Lenkgetriebe (4) in der Nähe der Vorderseite des Automobils angebracht ist,
**dadurch gekennzeichnet,**
daß das umwandelnde Mittel eine Lagerbockanordnung (3) aufweist, welche drehbar, in der Nähe des Vorderendes des Chassis (1) angebracht ist, um eine Vorderkante (33) der Lagerbockanordnung (3) sich nach rückwärts bewegen zu lassen, wenn bei der Frontalkollision die Aufprallkraft der Vorderkante (33) zugeführt wird, und daß das Lenkgetriebe (4) mit der Lagerbockanordnung (3) an einer Stelle verbunden ist, welche relativ zu der Vorderkante (33) der Lagerbockanordnung (3) weiter rückwärts und tiefer gelegen ist, so daß das Lenkgetriebe (4) bei einer Drehung der Lagerbockanordnung (3) abgesenkt wird.

8. Tragende Struktur nach Anspruch 7, wobei die Lagerbockanordnung (3) ein Paar von Zwischenabschnitten (36) aufweist, welche jeweils zwischen einem zentralen Abschnitt (A) und dem jeweiligen Endabschnitt (3a) der Lagerbockanordnung (3) angeordnet sind und eine reduzierte Steifigkeit aufweisen.

9. Tragende Struktur nach Anspruch 7 oder 8, wobei die Lagerbockanordnung (3) einen hohlen dreieckigen Querschnitt aufweist und das Dreieck eine horizontale obere Wand (30), eine vertikale rückseitige Wand (31) und eine vorwärts ansteigend geneigte Wand (32) besitzt.

10. Tragende Struktur nach Anspruch 9, wobei die geneigte Wand (32) glatt ist.

## Revendications

1. Une structure support pour un mécanisme de direction (4) d'une automobile, comprenant des moyens de conversion mécaniques pour convertir une force d'écrasement en un déplacement orienté vers le bas du mécanisme de direction (4) connecté à un volant (40) de l'automobile, la force d'écrasement étant générée en cas de collision avant de l'automobile et appliquée à l'extrémité avant de l'automobile, le mécanisme de direction (4) étant monté de façon adjacente à l'extrémité avant de l'automobile, les moyens de conversion comprenant des organes de sous-châssis (2), dont chacun est connecté à un châssis de carrosserie de l'automobile, chaque organe de sous-châssis (2) ayant une partie inclinée (21) montant en direction de l'avant, formée au niveau de la partie avant de chaque organe de sous-châssis (2), caractérisée en ce que le mécanisme de direction (4) est supporté par la partie inclinée (21), chaque organe de sous-châssis (2) ayant une partie de facilitation de flexion (22) espacée vers l'arrière vis-à-vis de la partie inclinée (21), de manière que la partie de facilitation de flexion (22) agisse pour augmenter l'inclinaison de la partie inclinée (21) lors d'une collision avant de l'automobile.

2. La structure support selon la revendication 1, dans laquelle la partie de facilitation de flexion (22) est formée par une réduction de la résistance en flexion au niveau de la partie de facilitation de flexion (22) de chaque organe de sous-châssis (2).

3. La structure support selon la revendication 2, dans laquelle la partie de facilitation de flexion (22) est constituée en formant une partie creusée (23) au niveau de la partie de facilitation de flexion (22) de chaque dit organe de sous-châssis (2).

4. La structure support selon l'une quelconque des revendications 1-3, dans laquelle un coude est formé au niveau de la partie de facilitation de flexion (22) de chaque organe de sous-châssis (2).

5. La structure support selon l'une quelconque des revendications 1-4, dans laquelle les moyens de conversion comprennent en outre un ensemble support (3) supporté par et s'étendant entre les parties inclinées (21) des organes de sous-châssis (2), le mécanisme de direction (4) étant connecté à l'ensemble support (3).

6. La structure support selon la revendication 5, dans laquelle l'ensemble support (3) est monté à rotation pour produire un déplacement vers l'arrière d'un bord avant (33) de l'ensemble support (3) lorsqu'une force d'écrasement, imputable à la collision avant, est appliquée sur le bord avant (33), et dans lequel le mécanisme de direction (4) est connecté à l'ensemble support (3) en une position qui est plus basse et à l'arrière par rapport au bord avant (33) de l'ensemble support (3), de manière que le mécanisme de direction (4) soit abaissé lorsqu'il y a rotation de l'ensemble support (3).

7. Une structure support pour un mécanisme de direction (4) d'une automobile, comprenant des moyens de conversion mécaniques pour convertir une force d'écrasement en un déplacement vers le bas du mécanisme de direction (4) connecté à un volant (40) de l'automobile, la force d'écrasement étant générée en cas de collision avant de l'automobile et appliquée à l'extrémité avant de l'automobile, le mécanisme de direction (4) étant monté de façon adjacente à l'extrémité avant de l'automobile, caractérisée en ce que les moyens de conversion comprennent un ensemble support (3) qui est monté adjacent à l'extrémité avant du châssis de carrosserie (1) pour tourner afin de déplacer un bord avant (33) de l'ensemble support (3) vers l'arrière lorsque la force d'écrasement imputable à la collision avant est appliquée au bord avant (33), le mécanisme de direction (4) étant connecté à l'ensemble support (3) en une position qui est placée plus bas et à l'arrière par rapport au bord avant (33) de l'ensemble support (3), de manière que le mécanisme de direction (4) soit abaissé lorsque l'ensemble support (3) tourne.

8. La structure support selon la revendication 7, dans laquelle l'ensemble support (3) comprend une paire de parties intermédiaires (36), dont chacune est placée entre une partie centrale (A) et chaque partie d'extrémité (3a) de l'ensemble support (3), les parties intermédiaires ayant une rigidité réduite.

9. La structure support selon la revendication 7 ou 8, dans laquelle l'ensemble support (3) a une section transversale triangulaire creuse, le triangle ayant une paroi supérieure horizontale (30), une paroi arrière verticale (31) et une paroi inclinée (32) montant en allant vers l'avant.

10. La structure support selon la revendication 9, dans laquelle la paroi inclinée (32) est plate.
